# EUROPÄISCHE PATENTSCHRIFT

(11) **EP 3 823 815 B1**
(45) Veröffentlichungstag und Bekanntmachung des Hinweises auf die Patenterteilung: **07.08.2024**
(21) Anmeldenummer: 19729253.5
(22) Anmeldetag: 05.06.2019
(51) Int. Cl.: B29C 65/16, B60R 16/02, H02G 3/22, H02G 15/013, F16L 5/02, B29L 31/34

(54) **VERFAHREN UND VORRICHTUNG ZUR HERSTELLUNG EINER DURCHSTECKVERBINDUNG MEHRERER KABEL ODER SCHLÄUCHEN DURCH EIN KUNSTSTOFFBAUTEIL**
METHOD AND APPARATUS FOR PRODUCING A PLUG-THROUGH CONNECTION OF A PLURALITY OF CABLES OR HOSES THROUGH A PLASTIC COMPONENT
PROCÉDÉ ET DISPOSITIF DE PRODUCTION D'UNE CONNEXION PAR ENFICHAGE DE PLUSIEURS CÂBLES OU TUBES AU MOYEN D'UNE PIÈCE EN PLASTIQUE

(30) Priorität: 17.07.2018 DE 102018211883
(43) Veröffentlichungstag der Anmeldung: 26.05.2021
(73) Patentinhaber: Robert Bosch GmbH, 70442 Stuttgart (DE)
(72) Erfinder: FINNAH, Guido Bernd, 71287 Weissach (DE)
(86) Internationale Anmeldenummer: PCT/EP2019/064645
(87) Internationale Veröffentlichungsnummer: WO 2020/015916

(56) Entgegenhaltungen:
- WO-A1-2017/199938
- DE-A1- 10 338 732
- DE-A1- 102016 212 690

## Beschreibung

Die vorliegende Erfindung betrifft ein Verfahren zur Herstellung einer Durchsteckverbindungsanordnung mehrerer elektrischer Kabel und/oder fluidführender Schläuche, mit einer aus einem Kunststoff bestehenden Ummantelung, welche beabstandet nebeneinander angeordnet durch je zugeordnete Durchbrüche eines Kunststoffbauteils verlaufen. Daneben betrifft die Erfindung auch eine Laserstrahlvorrichtung zur Herstellung einer thermischen Verschweißung, welche im Zusammenhang mit diesem Verfahren ausgeführt wird.

Das Einsatzgebiet der Erfindung erstreckt sich vorzugsweise auf die Kraftfahrzeugtechnik und darüber hinaus auch auf andere Anwendungsgebiete, bei denen mehrere elektrische Kabel oder fluidführende Schläuche abgedichtet durch ein Bauteil, beispielsweise ein Gerätegehäuse, ein Tankbehälter oder eine Rohrleitung, hindurchzuführen oder hierin einzuführen sind. Derartige elektrische Kabel können beispielsweise stromführende Kabel einer elektrischen Energieversorgung, Sensorkabel oder dergleichen sein. Fluidführende Schläuche können beispielsweise Wasserleitungen, pneumatische Verbindungsleitungen oder dergleichen sein. Die elektrischen Kabel und fluidführenden Schläuche haben die Gemeinsamkeit, dass diese mit einer thermoplastischen Ummantelung aus Kunststoff versehen sind, um vornehmlich als elektrische Isolation oder Korrosionsschutz zu dienen. Im Falle fluidführender Schläuche kann die Funktion der Ummantelung auch gleichzeitig die Leitungsfunktion mit umfassen. Das Kunststoffbauteil, durch welches derartige elektrische Kabel oder fluidführende Schläuche im Rahmen der hier interessierenden Durchsteckverbindung abgedichtet durch- oder einzuführen ist, besteht aus einem thermoplastischen Kunststoff.

### Stand der Technik

Aus dem allgemein bekannten Stand der Technik gehen einfache Durchsteckverbindungen für elektrische Kabel oder fluidführende Schläuche in ein Kunststoffgehäuse oder dergleichen hervor, welche durch radiale Laserschweißvorgänge dichtgeschweißt werden. Durch die über ein oberflächliches Aufschmelzen an der Verbindungsstelle hervorgerufene stoffschlüssige Verbindung wird also eine Fixierung sowie eine Abdichtung erzielt. Hierbei dreht sich entweder das Kunststoffbauteil im Laserstrahl oder der Laserstrahl rotiert durch entsprechende Umlenkoptiken um die Verbindungsstelle. Für diese Art der Verbindung ist es vorteilhaft, wenn eine quasi simultane Verschweißung durchgeführt wird, also nicht gleichzeitig gesamte Verbindungsstelle bestrahlt wird, sondern dass diese mehrfach alternierend vom Laserstrahl überfahren wird, sodass sich die Verbindungsstelle nahezu simultan erwärmt und geschweißt wird. Problematisch erweist sich jedoch eine Situation, bei der eine zweite oder weitere Durchsteckverbindung direkt neben der so hergestellten einfachen Durchsteckverbindung zu realisieren ist, da das Laserlicht der Laserstrahleinheit nicht ungehindert radial an die Verbindungsstelle geleitet werden kann. Dieselbe Situation entsteht, wenn eine einfache Durchsteckverbindung direkt neben einem abschattenden Anbauteil verlaufen soll.

Aus der DE 10 2012 207 762 A1 geht eine geeignete technische Lösung zur Herstellung einer solchen Mehrfach-Durchsteckverbindung von vorzugsweise in einer Reihe angeordneten elektrischen Leitungen hervor, welche auf einer anderen Technologie basiert. Um mehrere elektrische Anschlusskabel in das Gehäuse eines Abgassensors abgedichtet einzuführen und hieran zu befestigen wird vorgeschlagen, einen Öffnungsquerschnitt für das Hineinführen der Anschlusskabel mit einem thermoplastischen Fluorpolymer-haltigen Material auszufüllen. Konkret wird beim einem bevorzugten Ausführungsbeispiel hierfür ein topfförmiges Führungsstück aus Stahl verwendet, dessen Bodenbereich Durchbrüche zum Hindurchstecken je eines Anschlusskabels aufweist. In den Innenraum des topfförmigen Führungsstücks taucht der Randbereich des Sensorgehäuses ein, welcher die Öffnung bildet. In den Zwischenraum wird das besagte thermoplastische Material eingelegt und verflüssigt. Nach dem Aushärten entsteht die abgedichtete Mehrfach-Durchsteckverbindung, welche gleichzeitig auch die Gehäuseöffnung abgedichtet verschließt. Die verschiedenartigen aufeinander folgenden Verfahrensschritte verursachen jedoch einen recht hohen Herstellungsaufwand.

Die DE 103 38 732 A1 offenbart Schichten eines mehrschichtigen kartenförmigen Datenträgers, die im Laserdurchstrahlverfahren miteinander verbunden, insbesondere verschweißt werden. Gleichzeitig können Funktionselemente im Laserdurchstrahlverfahren im Kartenverbund fixiert und Strukturen mittels Laser in oder auf einzelnen Schichten des Schichtverbundes erzeugt werden.

Die WO 2017/199938 A1 offenbart ein Verfahren zur Herstellung einer Kabeldurchführung durch Zusammenfügen mehrerer Teile, von denen wenigstens zwei thermoplastische Teile sind, die eine thermoplastische Zusammensetzung aufweisen, und wobei wenigstens zwei der thermoplastischen Teile (ein lichttransmissives Teil und ein lichtabsorbierendes Teil) durch Laserschweißen verbunden werden.

Die DE 10 2016 212690 A1 offenbart ein Verfahren zum Ausbilden einer Laserschweißverbindung, bei dem zwei Fügepartner durch Einwirkung eines Laserstrahls in einem Fügebereich unter Ausbildung einer Schweißnaht miteinander verbunden werden, wobei der eine Fügepartner aus einem für Laserstrahlung transparenten Material und der andere Fügepartner aus einem für Laserstrahlung absorbierenden Material besteht, und wobei von den zwei Fügepartnern eine Aufnahme für ein von den Fügepartnern separates Bauteil ausgebildet wird.

Es ist daher die Aufgabe der vorliegenden Erfindung eine Durchsteckverbindungsanordnung für vorzugsweise mehrere elektrische Kabel oder fluidführende Schläuche der gattungsgemäßen Art dahingehend weiter zu verbessern, dass eine einfache und schnelle Fertigung möglich wird, welche sich durch eine zuverlässige Abdichtung zwischen den Verbindungspartnern auszeichnet.

### Offenbarung der Erfindung

Die Aufgabe wird verfahrenstechnisch durch Anspruch 1 gelöst, hinsichtlich einer hierdurch entstehenden Durchsteckverbindungsanordnung wird auch Anspruch 6 verwiesen. Der Anspruch 11 gibt eine spezielle Laserschweißvorrichtung zur Herstellung der erfindungsgemäßen Durchsteckverbindungsanordnung an. Die Erfindung schließt die verfahrenstechnische Lehre ein, dass die Herstellung einer Mehrfach-Durchsteckverbindungsanordnung der vorstehend beschriebenen Art ein Kunststoffbauteil voraussetzt, welches mit mehreren vorgefertigten Durchbrüchen zunächst bereitzustellen ist. Die Durchbrüche können beispielsweise spritzgießtechnisch hergestellt werden oder durch Spanen, beispielsweise bohrtechnisch, angefertigt werden. Nachfolgend werden die elektrischen Kabel und/oder fluidführenden Schläuche in die je zugeordneten Durchbrüche montiert, also hindurchgesteckt, sodass die Außenwandung der aus Kunststoff bestehenden Ummantelung mit der Innenwandlung der jeweiligen Durchbrüche des Kunststoffbauteils in Kontakt kommen. Dazu sollten die elektrischen Kabel bzw. fluidführenden Schläuche gegenüber den ihnen zugeordneten Durchbrüchen eine Übergangspassung bilden. Schließlich werden die elektrischen Kabel bzw. fluidführenden Schläuche mit dem Kunststoffbauteil im Bereich des jeweiligen Durchbruchs zur Erzeugung einer stoffschlüssigen dichtenden Bauteilverbindung thermisch verschweißt, indem:
- mindestens zwei einander gegenüberliegend positionierte Laserstrahleinheiten auf eine je zugeordnete initiale Verbindungsstelle ausgerichtet werden, wonach
- die gegenüberliegenden Laserstrahleinheiten aktiviert und in eine lineare Relativbewegung quer zur Verlaufsrichtung der Durchbrüche, also in Querschnittsrichtung, versetzt werden, um durch oberflächliches Aufschmelzen der thermoplastischen Ummantelung mit dem thermoplastischen Kunststoffbauteil die stoffschlüssige Verbindung zu schaffen.

Der Vorteil der erfindungsgemäßen Lösung liegt insbesondere darin, dass in zeitsparender Weise gleichzeitig von zwei einander gegenüberliegenden Laserstrahleinheiten aus geschweißt wird, zwischen denen sich das Bauteil befindet. Hierdurch lässt sich zudem jede Stelle des umlaufenden Durchbruchs erreichen, ohne dass das Werkzeug oder das Werkstück eine Drehbewegung ausführen müssen. Die erfindungsgemäße Lösung überwindet damit das Vorurteil, dass eine derartige Verschweißung per Laserstrahl nur mit einer Vorrichtung möglich sein soll, welche einen äquidistanten Abstand zwischen der Laserstrahleinheit und der Schweißstelle sicherstellt. Basierend auf dieser Erkenntnis lässt sich nun auch die eingangs diskutierte Abschattungsproblematik bei mehreren nebeneinanderliegenden elektrischen Kabeln oder fluidführenden Schläuchen lösen, sodass auch derartige Mehrfach-Durchsteckverbindungen einer Laserschweiß-Technologie zugänglich sind.

Vorzugsweise besteht das Kunststoffbauteil aus einem transparenten oder transluzenten thermoplastischen Kunststoff und ist insoweit lichtdurchlässig, um den Laserstrahl zumindest teilweise hindurchzuleiten, also nur eine geringfügige Brechung und Streuung des Lichts zu bewirken. Hierdurch ist eine Verschweißung nicht allein auf den von außen her zugänglichen Randbereich der Durchbrüche beschränkt, sondern kann auch im innenliegenden Mantelbereich erfolgen.

Um eine möglichst kurze Herstellungszeit zu realisieren wird vorgeschlagen, dass die gegenüberliegenden Laserstrahleinheiten vorzugsweise synchron in Linearrichtung X entlang des Kunststoffbauteils verfahren werden. Durch diese Gleichzeitigkeit kann die abgedichtete Mehrfach-Durchsteckverbindung in einem Zug geschaffen werden.

Gemäß einer bevorzugten Ausführungsform zur Durchführung des erfindungsgemäßen Verfahrens wird vorgeschlagen, dass die einander gegenüberliegenden Laserstrahleinheiten parallel zum ortsfest eingespannten Kunststoffbauteil verfahren werden. Alternativ ist es jedoch auch denkbar, dass das Kunststoffbauteil zwischen einander gegenüberliegenden ortsfesten Laserstrahleinheiten verfahren wird. Je nach Abmessungen und Gewicht des Werkstücks in Relation zum Werkzeug kann eine der beiden Alternativen zum Einsatz kommen.

Gemäß eines bevorzugten Ausführungsbeispiels einer Werkstoffpaarung für die erfindungsgemäße Lösung wird vorgeschlagen, dass die Ummantelung aus einem Kunststoffmaterial, ausgewählt aus einer Gruppe umfassend, Polyamid (PA), Polyethylen (PE), Polypropylen (PP), Polyvinylchlorid (PVC), Elastoplaste (TPE), Polyethylenterephthalat (PET), Fluorethylenpropylen (FEP), Polytetrafluorethylen (PTFE) und dergleichen besteht, wohingegen das Kunststoffbauteil aus demselben oder einem hiermit verschweißbaren Material hergestellt ist.

Gemäß einer die Erfindung weiter verbessernden Maßnahme wird vorgeschlagen, dass der äußere Konturverlauf des Kunststoffbauteils im Bereich der Durchbrüche derart hieran angepasst ist, dass sich zumindest im Strahlenweg der Laserstrahleinheit etwa gleiche Wandstärken ergeben. So kann der äußere Konturverlauf des Kunststoffbauteils beispielsweise entsprechend gewellt ausgebildet sein. Dieser Maßnahme liegt die Erkenntnis zugrunde, dass die Wanddicke des transparenten bis transluzenten Materials des Kunststoffbauteils nicht zu stark schwanken sollte, um eine sichere Laserschweißung zu ermöglichen. Dieses Erfordernis lässt sich durch eine konstruktive Anpassung der Bauteilform erfüllen. Das Kunststoffbauteil ist insoweit herstellungsoptimal konstruiert.

Durch das transparente bis transluzente Material des Kunststoffbauteils wird das Laserlicht derart stark gestreut, dass auch bei direkter Gegenüberlage der Laseroptiken beider Laserstrahleinheiten die eine Laseroptik und auch die hierin integrierte Pyrometermessung der Oberflächentemperatur nicht von der gegenüberliegenden Laseroptik beeinflusst wird. Die Pyrometermessung dient der Regelung des Laserschweißprozesses in allgemein bekannter Weise.

Gemäß einer anderen die Erfindung weiter verbessernden Maßnahme wird vorgeschlagen, dass am Kunststoffbauteil in Fortsetzung eine Reihe von Durchbrüchen für hindurchzuführende elektrische Kabel oder fluidführende Schläuche einander gegenüberliegende Endabschnitte angeordnet sind, welche eine Dicke D1 aufweisen, die schmaler als die Bauteildicke D2 im Bereich der Durchbrüche ist. Auch diese gegenüberliegenden Endabschnitte dienen einem herstellungsoptimalen Bauteildesign, um zu verhindern, dass in einer Einlauf- und Auslaufphase der Laserverschweißung die Laseroptiken der einander gegenüberliegenden Laserstrahleinheiten sich gegeneinander schädigen. Weitere, die Erfindung verbessernde Maßnahmen werden nachstehend gemeinsam mit der Beschreibung bevorzugten Auszugsbeispiele der Erfindung anhand der Figuren näher dargestellt.

### Ausführungsbeispiele

Es zeigt:
- Figur 1: eine schematische Seitenansicht einer Mehrfach-Durchsteckverbindungsanordnung für elektrische Kabel,
- Figur 2: eine schematische Draufsicht eines ersten Ausführungsbeispiels für eine herstellungsoptimale Bauteilgestaltung,
- Figur 3: eine schematische Seitenansicht einer Stirnseite der Mehrfach-Durchsteckverbindungsanordnung nach Figur 1 und Figur 2,
- Figur 4: eine schematische Draufsicht eines zweiten Ausführungsbeispiels für eine herstellungsoptimale Bauteilgestaltung,
- Figur 5: eine schematische Draufsicht eines dritten Ausführungsbeispiels für eine herstellungsoptimale Bauteilgestaltung,
- Figur 6: einen schematischen Ablaufplan eines Verfahrens zur Herstellung einer Mehrfach-Durchsteckverbindungsanordnung.

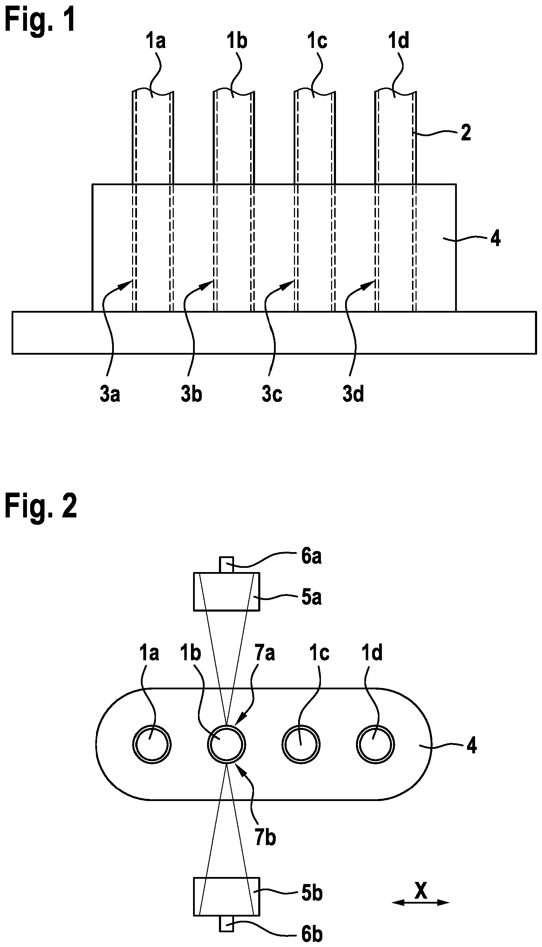

Nach Figur 1 besteht eine exemplarische Durchsteckverbindungsanordnung aus mehreren elektrischen Kabeln 1a bis 1d, welche jeweils mit einer aus thermoplastischem Kunststoff bestehenden Ummantelung 2 versehen sind. Die einzelnen elektrischen Kabel 1a bis 1d sind beabstandet nebeneinander angeordnet und durch je zugeordnete Durchbrüche 3a bis 3d eines transparenten thermoplastischen Kunststoffbauteils 4 geführt.

Zur Herstellung einer thermischen Verschweißung der elektrischen Kabel 1a bis 1d mit dem Kunststoffbauteil 4 dient eine Laserschweißvorrichtung, welche im Wesentlichen ein paar von gegenüberliegend positionierten Laserstrahleinheiten 5a und 5b umfasst. Die beiden gegenüberliegenden Laserstrahleinheiten 5a und 5b durchstrahlen jeweils das transparente Material des Kunststoffbauteils 4 und sind hier exemplarisch beidseits des elektrischen Kabels 1b fokussiert, um an dieser Verbindungsstelle das elektrische Kabel 1b mit dem Kunststoffbauteil 4 thermisch zu verschweißen, sodass eine stoffschlüssig dichtende Bauteilverbindung entsteht. Um alle elektrischen Kabel 1a bis 1d auf diese Weise mit dem Kunststoffbauteil 4 zu verbinden, werden die Laserstrahleinheiten 5a und 5b synchron in Linearrichtung X entlang des Kunststoffbauteils 4 verfahren. Dabei bewegen sich die einander gegenüberliegenden Laserstrahleinheiten 5a und 5b parallel zum ortsfest eingespannten Kunststoffbauteil 4.

Die Laserschweißvorrichtung umfasst ferner je ein den beiden Laserstrahleinheiten 5a und 5b zugeordnete Pyrometermesseinrichtung 6a bzw. 6b, welche das allgemein bekannte Messprinzip die Oberflächentemperatur an der aktuellen Verbindungsstelle 7a bzw. 7b misst, um die zugeordneten Laserstrahleinheiten 5a bzw. 5b geregelt anzusteuern. Die Regelung erfolgt auf eine materialabhängig eingestellte Soll-Temperatur an den Verbindungsstellen 7a sowie 7b, um dort ein lokales Aufschmelzen des Kunststoffmaterials zur Herstellung der gewünschten stoffschlüssigen Verbindung zu erzeugen.

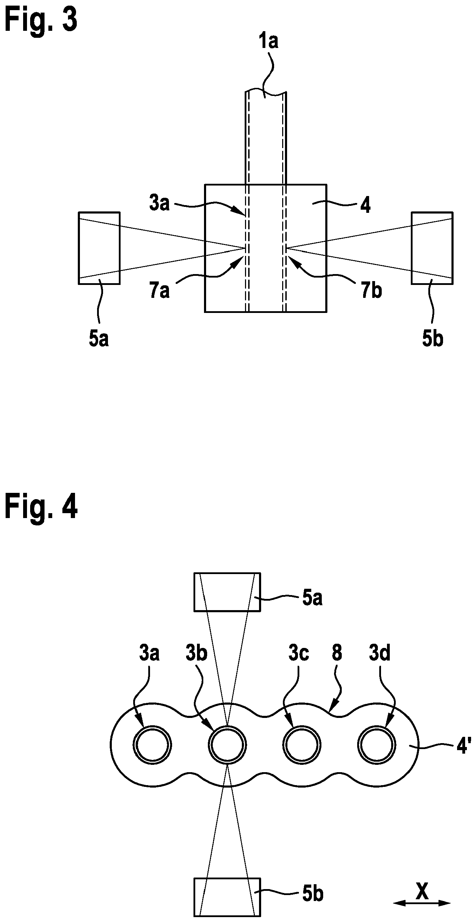

Die Figur 3 verdeutlicht in der Seitenansicht, dass das Paar von gegenüberliegend positionierten Laserstrahleinheiten 5a und 5b als Werkzeug auf eine je zugeordnete auf derselben Höhe liegende initiale Verbindungsstelle 7a bzw. 7b des Kunststoffbauteils 4 als Werkstück ausgerichtet sind.

Gemäß dem in der Figur 4 dargestellten Ausführungsbeispiel ist der äußere Konturverlauf 8 des Kunststoffbauteils 4' im Bereich der Durchbrüche 3a bis 3b gewellt ausgebildet, so dass sich zumindest im Strahlenweg der Laserstrahleinheiten 5a und 5b in etwa gleiche Wandstärken ergeben. Hierdurch wird ein hinreichend gleichmäßiges Aufschmelzen des Kunststoffmaterials zur Herstellung der stoffschlüssigen Verbindung gewährleistet.

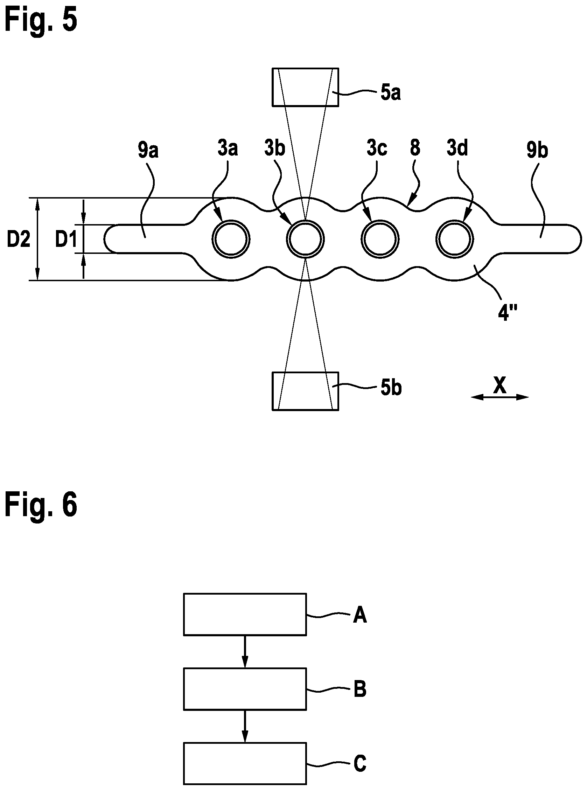

Nach dem in Figur 5 dargestellten weiteren Ausführungsbeispiel ist am Kunststoffbauteil 4" in Fortsetzung der Reihe von Durchbrüchen 3a bis 3d einander gegenüberliegende Endabschnitte 9a bzw. 9b angeformt. Die beiden Endabschnitte 9a und 9b weisen eine Dicke D1, welche schmaler als die Bauteildicke D2 für ein Verschweißen entlang der Linearrichtung X dienen die beiden Endabschnitte 9a und 9b als Ein- bzw. Auslaufabschnitte für die Laserschweißvorrichtung. Verfährt diese entlang des Kunststoffbauteils 4", so erfolgt im Bereich der Endabschnitte 9a und 9b das Aktivieren bzw. Deaktivieren des Laserstrahls, so dass eine gegenseitige Schädigung der einander gegenüberliegenden Laserstrahleinheiten 5a und 5b vermieden wird.

Nach Figur 6 wird mit der vorstehend beschriebenen Laserschweißvorrichtung die erfindungsgegenständliche Mehrfach-Durchstreckverbindungsanordnung nach einem der drei vorstehend beschriebenen exemplarischen Ausführungsbeispiele derart hergestellt, dass in einem initialen Schritt zunächst ein Bereitstellen A des Kunststoffbauteils 4 mit den vorgefertigten mehreren Durchbrüchen 3a bis 3d erfolgt.

In einem sich hieran anschließenden Herstellungsschritt eines Montierens B werden die elektrischen Kabel 1a bis 1d durch hinzugeordneten Durchbrüche 3a bis 3d gesteckt. Dabei sind die Bauteilmaße so gewählt, dass die miteinander montierten Bauteile miteinander in Kontakt kommen.

In einem nächsten Herstellungsschritt erfolgt ein thermisches Verschweißen C der elektrischen Kabel mit dem Kunststoffbauteil im Bereich des jeweiligen Durchbruchs zur Erzeugung der stoffschlüssig dichtenden Bauteilverbindung, wobei die einander gegenüberliegend positionierten Laserstrahleinheiten aktiviert und in linearer Verlaufsrichtung entlang der Reihe von Durchbrüchen 3a bis 3d verfahren werden, sodass durch oberflächliches Aufschmelzen der miteinander zu verbindenden Materialien die stoffschlüssige Verbindung nach dem Abkühlen entsteht.

Die Erfindung ist nicht beschränkt auf die vorstehend beschriebenen bevorzugten Ausführungsbeispiele. Es sind vielmehr auch Abordnungen hiervon denkbar, welche im Schutzbereich der nachfolgenden Ansprüche mit umfasst sind.

Nicht von den geltenden Ansprüchen umfasst ist es beispielsweise auch möglich, statt einer Mehrzahl von elektrischen Kabeln oder fluidführenden Schläuchen auch nur ein einziges Bauteil dieser Art mit einem Kunststoffbauteil zu einer Durchsteckverbindungsanordnung der erfindungsgemäßen Art zu vereinen. Dies kann insbesondere dann angewendet werden, wenn direkt neben dem zu montierenden elektrischen Kabel oder dem fluidführenden Schlauch ein abschattendes Bauteil angeordnet ist, welches eine rotative Werkzeugbewegung nicht zulässt. Ferner ist es auch denkbar, durch eine mehrfache Überfahrt der Verbindungsstellen eine quasi simultane Verschweißung zu realisieren.

## Patentansprüche

1. Verfahren zur Herstellung einer Durchsteckverbindungsanordnung mehrerer elektrischer Kabel (1a - 1d) und/oder fluidführender Schläuche, mit einer aus einem Kunststoff bestehenden Ummantelung (2), welche beabstandet nebeneinander angeordnet durch je zugeordnete Durchbrüche (3a - 3d) eines Kunststoffbauteils (4) verlaufen, umfassend die folgenden Schritte:
- Bereitstellen (A) des Kunststoffteils (4) mit den vorgefertigten mehreren Durchbrüchen (3a - 3d),
- Montieren (B) der elektrischen Kabel (1a - 1d) und/oder fluidführenden Schläuche durch die je zugeordneten Durchbrüche (3a - 3d), so dass die Außenwandung der aus Kunststoff bestehenden Ummantelung (2) mit der Innenwandung der jeweiligen Durchbrüche (3a - 3d) des Kunststoffbauteils (4) in Kontakt kommen,
- Thermisches Verschweißen (C) der elektrischen Kabel (1a - 1d) und/oder fluidführender Schläuche mit dem Kunststoffbauteil (4) im Bereich des jeweiligen Durchbruchs (3a - 3d), zur Erzeugung einer stoffschlüssig dichtenden Bauteilverbindung, indem:
- mindestens zwei einander gegenüberliegend positionierte Laserstrahleinheiten (5a, 5b) auf eine je zugeordnete initiale Verbindungsstelle ausgerichtet werden, wonach
- die gegenüberliegenden Laserstrahleinheiten (5a, 5b) aktiviert und in eine lineare Relativbewegung quer zur Verlaufsrichtung der Durchbrüche (3a - 3d) gesetzt werden, um durch oberflächliches Aufschmelzen der Ummantelung (2) mit dem Kunststoffbauteil (4) die stoffschlüssige Verbindung zu schaffen.

2. Verfahren nach Anspruch 1,
**dadurch gekennzeichnet, dass** das Kunststoffbauteil (4) zumindest im Bereich der Durchdringungsstellen lichtdurchlässig ist und insbesondere aus einem transparenten oder transluzenten thermoplastischen Kunststoff besteht, um den von den Laserstrahleinheiten (5a, 5b) emittierten Laserstrahl zumindest teilweise hindurchzuleiten.

3. Verfahren nach Anspruch 1,
**dadurch gekennzeichnet, dass** die gegenüberliegenden Laserstrahleinheiten (5a, 5b) synchron in Linearrichtung (X) entlang des Kunststoffbauteils (4) verfahren.

4. Verfahren nach Anspruch 1,
**dadurch gekennzeichnet, dass** die einander gegenüberliegenden Laserstrahleinheiten (5a, 5b) parallel zum ortsfesten Kunststoffbauteil (4) verfahren werden.

5. Verfahren nach Anspruch 1,
**dadurch gekennzeichnet, dass** das Kunststoffbauteil (4) zwischen den einander gegenüberliegenden ortsfesten Laserstrahleinheiten (5a, 5b) verfahren wird.

6. Durchsteckverbindungsanordnung mehrerer elektrischer Kabel (1a - 1d) und/oder fluidführender Schläuche, mit einer aus einem Kunststoff bestehenden Ummantelung (2), welche beabstandet nebeneinander angeordnet durch je zugeordnete Durchbrüche (3a - 3d) eines Kunststoffbauteils (4) verlaufen, hergestellt nach einem Verfahren gemäß der vorstehenden Ansprüche 1 bis 5.

7. Durchsteckverbindungsanordnung nach Anspruch 6,
**dadurch gekennzeichnet, dass** die Ummantelung (2) aus einem Kunststoffmaterial, ausgewählt aus einer Gruppe, umfassend, Polyamid (PA), Polyethylen (PE), Polypropylen (PP), Polyvinylchlorid (PVC), Elastoplaste (TPE), Polyethylenterephthalat (PET), Fluorethylenpropylen (FEP), Polytetrafluorethylen (PTFE) besteht, wohingegen das Kunststoffbauteil (4) aus demselben oder einem hiermit verschweißbaren Material hergestellt ist.

8. Durchsteckverbindungsanordnung nach Anspruch 6,
**dadurch gekennzeichnet, dass** der äußere Konturverlauf (8) des Kunststoffbauteils (4') im Bereich der Durchbrüche (3a - 3d) derart hieran angepasst ist, dass sich zumindest im Strahlenweg der Laserstrahleinheiten (5a, 5b) in etwa gleiche Wandstärken ergeben.

9. Durchsteckverbindungsanordnung nach Anspruch 8,
**dadurch gekennzeichnet, dass** der äußere Konturverlauf (8) des Kunststoffbauteils (4') gewellt ausgebildet ist.

10. Durchsteckverbindungsanordnung nach Anspruch 8 oder 9,
**dadurch gekennzeichnet, dass** am Kunststoffbauteil (4") in Fortsetzung der Reihe von Durchbrüchen (3a - 3d) einander gegenüberliegende Endabschnitte (9a, 9b) angeordnet sind, die eine Dicke (D1) aufweisen, welche schmaler als die Bauteildicke (D2) im Bereich der Durchbrüche (3a - 3d) ist.

11. Laserschweißvorrichtung zur Herstellung einer thermischen Verschweißung von elektrischen Kabeln (1a -1d) und/oder fluidführenden Schläuchen mit einem Kunststoffbauteil (4) für eine Durchsteckverbindungsanordnung nach einem der Ansprüche 6 bis 10,
**dadurch gekennzeichnet, dass** mindestens ein Paar von gegenüberliegend positionierten Laserstrahleinheiten (5a, 5b) als Werkzeug auf eine je zugeordnete initiale Verbindungsstelle (7a, 7b) eines Kunststoffbauteils (4) als Werkstück ausgerichtet sind, wobei Mittel zur Ausführung einer linearen Relativbewegung zwischen Werkstück und Werkzeug zur Erzeugung einer thermischen Schweißnaht vorgesehen sind, und dass die Laserstrahleinheiten (5a, 5b) mit jeweils einer integrierten Pyrometermesseinrichtung (6a; 6b) zur Messung der Oberflächentemperatur an der Verbindungsstelle (7a; 7b) ausgestattet sind.

## Claims

1. Method for producing a plug-through connection arrangement of a plurality of electrical cables (1a - 1d) and/or fluid-conveying hoses, which have an encapsulation (2) consisting of a plastic and which extend through respectively assigned openings (3a - 3d) of a plastic component (4) while being arranged at a distance next to one another, comprising the following steps:
- providing (A) the plastic part (4) having the prefabricated plurality of openings (3a - 3d),
- mounting (B) the electrical cables (1a - 1d) and/or fluid-conveying hoses through the respectively assigned openings (3a - 3d) so that the outer wall of the encapsulation (2) consisting of plastic comes into contact with the inner wall of the respective openings (3a - 3d) of the plastic component (4),
- thermally welding (C) the electrical cables (1a - 1d) and/or fluid-conveying hoses to the plastic component (4) in the region of the respective opening (3a - 3d) in order to produce a materially sealing component connection, by:
- at least two laser beam units (5a, 5b) positioned opposite one another being aimed at a respectively assigned initial connection position, after which
- the opposing laser beam units (5a, 5b) are activated and set in a linear relative movement transversely with respect to the extent direction of the openings (3a - 3d) in order to provide the material connection by surface fusion of the encapsulation (2) to the plastic component (4).

2. Method according to Claim 1,
**characterized in that** the plastic component (4), at least in the region of the penetration positions, transmits light and consists in particular of a transparent or translucent thermoplastic material in order to deliver the laser beam emitted by the laser beam units (5a, 5b) through at least partially.

3. Method according to Claim 1,
**characterized in that** the opposing laser beam units (5a, 5b) move synchronously in a linear direction (X) along the plastic component (4).

4. Method according to Claim 1,
**characterized in that** the mutually opposing laser beam units (5a, 5b) are moved parallel to the static plastic component (4).

5. Method according to Claim 1,
**characterized in that** the plastic component (4) is moved between the mutually opposing static laser beam units (5a, 5b) .

6. Plug-through connection arrangement of a plurality of electrical cables (1a - 1d) and/or fluid-conveying hoses, which have an encapsulation (2) consisting of a plastic and which extend through respectively assigned openings (3a - 3d) of a plastic component (4) while being arranged at a distance next to one another, produced by a method according to the preceding Claims 1 to 5.

7. Plug-through connection arrangement according to Claim 6,
**characterized in that** the encapsulation (2) consists of a plastic material selected from a group consisting of polyamide (PA), polyethylene (PE), polypropylene (PP), polyvinyl chloride (PVC), thermoplastic elastomers (TPE), polyethylene terephthalate (PET), fluorinated ethylene propylene (FEP), polytetrafluoroethylene (PTFE), while the plastic component (4) is produced from the same material or a material which can be welded thereto.

8. Plug-through connection arrangement according to Claim 6,
**characterized in that** the outer contour profile (8) of the plastic component (4') in the region of the openings (3a - 3d) is matched to the latter in such a way that there are approximately equal wall thicknesses at least in the beam path of the laser beam units (5a, 5b).

9. Plug-through connection arrangement according to Claim 8,
**characterized in that** the outer contour profile (8) of the plastic component (4') is configured in an undulating shape.

10. Plug-through connection arrangement according to Claim 8 or 9,
**characterized in that** mutually opposing end sections (9a, 9b), which have a thickness (D1) that is narrower than the component thickness (D2) in the region of the openings (3a - 3d), are arranged on the plastic component (4") in continuation of the row of openings (3a - 3d).

11. Laser welding device for producing thermal welding of electrical cables (1a - 1d) and/or fluid-conveying hoses to a plastic component (4) for a plug-through connection arrangement according to one of Claims 6 to 10,
**characterized in that** at least one pair of oppositely positioned laser beam units (5a, 5b) as a tool are aimed at a respectively assigned initial connection position (7a, 7b) of a plastic component (4) as a workpiece, means being provided for carrying out a linear relative movement between the workpiece and the tool in order to produce a thermal weld seam, and **in that** the laser beam units (5a, 5b) are respectively equipped with an integrated pyrometer measuring instrument (6a; 6b) for measuring the surface temperature at the connection position (7a; 7b).

## Revendications

1. Procédé de réalisation d'un agencement de liaison par enfichage de plusieurs câbles électriques (1a - 1d) et/ou tuyaux conduisant des fluides, avec une gaine (2) constituée d'une matière plastique, qui s'étendent agencés à distance les uns à côté des autres à travers des ouvertures (3a - 3d) respectivement associées d'un composant en matière plastique (4), comprenant les étapes suivantes :
- la préparation (A) de la pièce en matière plastique (4) avec les plusieurs ouvertures (3a - 3d) préfabriquées,
- le montage (B) des câbles électriques (1a - 1d) et/ou des tuyaux conduisant des fluides à travers les ouvertures (3a - 3d) respectivement associées, de telle sorte que la paroi extérieure de la gaine (2) constituée de matière plastique vient en contact avec la paroi intérieure des ouvertures (3a - 3d) respectives du composant en matière plastique (4),
- le soudage thermique (C) des câbles électriques (1a
- 1d) et/ou des tuyaux conduisant des fluides avec le composant en matière plastique (4) dans la zone de l'ouverture respective (3a - 3d), pour produire une liaison de composants étanche par liaison de matière, par le fait que :
- au moins deux unités de faisceau laser (5a, 5b) positionnées l'une en face de l'autre sont orientées vers un point de liaison initial respectif associé, après quoi
- les unités de faisceau laser (5a, 5b) opposées sont activées et mises en mouvement relatif linéaire transversalement à la direction d'extension des ouvertures (3a - 3d), afin de créer la liaison de matière par fusion superficielle de la gaine (2) avec le composant en matière plastique (4).

2. Procédé selon la revendication 1, **caractérisé en ce que** le composant en matière plastique (4) laisse passer la lumière au moins dans la zone des points de pénétration et est notamment constitué d'une matière thermoplastique transparente ou translucide afin de laisser passer au moins partiellement le faisceau laser émis par les unités de faisceau laser (5a, 5b).

3. Procédé selon la revendication 1, **caractérisé en ce que** les unités de faisceau laser opposées (5a, 5b) sont déplacées de manière synchrone dans la direction linéaire (X) le long du composant en matière plastique (4).

4. Procédé selon la revendication 1, **caractérisé en ce que** les unités de faisceau laser (5a, 5b) opposées l'une à l'autre sont déplacées parallèlement au composant en matière plastique fixe (4).

5. Procédé selon la revendication 1, **caractérisé en ce que** le composant en matière plastique (4) est déplacé entre les unités de faisceau laser fixes (5a, 5b) opposées l'une à l'autre.

6. Agencement de liaison par enfichage de plusieurs câbles électriques (1a - 1d) et/ou tuyaux conduisant des fluides, avec une gaine (2) constituée d'une matière plastique, qui s'étendent agencés à distance les uns à côté des autres à travers des ouvertures (3a - 3d) respectivement associées d'un composant en matière plastique (4), réalisé par un procédé selon les revendications 1 à 5 précédentes.

7. Agencement de liaison par enfichage selon la revendication 6, **caractérisé en ce que** la gaine (2) est constituée d'une matière plastique choisie dans un groupe comprenant le polyamide (PA), le polyéthylène (PE), le polypropylène (PP), le polychlorure de vinyle (PVC), les élastoplastes (TPE), le polyéthylène téréphtalate (PET), le fluoroéthylène propylène (FEP), le polytétrafluoroéthylène (PTFE), tandis que le composant en matière plastique (4) est réalisé à partir de la même matière ou d'une matière soudable à celle-ci.

8. Agencement de liaison par enfichage selon la revendication 6, **caractérisé en ce que** le tracé de contour extérieur (8) du composant en matière plastique (4') dans la zone des ouvertures (3a - 3d) leur est adapté de telle sorte qu'il en résulte des épaisseurs de paroi à peu près identiques au moins dans le trajet des faisceaux des unités de faisceau laser (5a, 5b).

9. Agencement de liaison par enfichage selon la revendication 8, **caractérisé en ce que** le tracé de contour extérieur (8) du composant en matière plastique (4') est configuré sous forme ondulée.

10. Agencement de liaison par enfichage selon la revendication 8 ou 9, **caractérisé en ce que** des sections d'extrémité (9a, 9b) opposées l'une à l'autre sont agencées sur le composant en matière plastique (4'') dans le prolongement de la série d'ouvertures (3a - 3d), lesquelles présentent une épaisseur (D1) qui est plus étroite que l'épaisseur du composant (D2) dans la zone des ouvertures (3a - 3d).

11. Dispositif de soudage au laser pour la réalisation d'un soudage thermique de câbles électriques (1a - 1d) et/ou de tuyaux conduisant des fluides avec un composant en matière plastique (4) pour un agencement de liaison par enfichage selon l'une quelconque des revendications 6 à 10,
**caractérisé en ce qu'**au moins une paire d'unités de faisceau laser (5a, 5b) positionnées en face en tant qu'outil sont orientées vers un point de liaison initial (7a, 7b) respectivement associé d'un composant en matière plastique (4) en tant que pièce à usiner, des moyens étant prévus pour exécuter un mouvement relatif linéaire entre la pièce à usiner et l'outil pour produire un cordon de soudure thermique, et **en ce que** les unités de faisceau laser (5a, 5b) sont équipées chacune d'un appareil de mesure pyrométrique intégré (6a ; 6b) pour mesurer la température de surface au niveau du point de liaison (7a ; 7b).
